Europäisches Patentamt

European Patent Office

Office européen des brevets

(19)

(11) Veröffentlichungsnummer: **0 168 498**
**A1**

# (12) EUROPÄISCHE PATENTANMELDUNG

veröffentlicht nach Art. 158 Abs. 3 EPÜ

(21) Anmeldenummer: **84901095.4**

(51) Int. Cl.⁴: **G 02 C 7/12**

(22) Anmeldetag: **25.02.84**

Daten der zugrundeliegenden inter-
nationalen Anmeldung:

(86) Internationale Anmeldenummer:
**PCT/JP 84/00067**

(87) Internationale Veröffentlichungsnummer:
**WO 85/03139 (18.07.85 85/16)**

(30) Priorität: **04.01.84 JP 148/84**
**06.02.84 JP 20530/84**

(71) Anmelder: **K-CORPORATION OF JAPAN,
Room 603 Familu Nakajima Koen 1-61, Nishi 1-chome,
Minami 11jho, Chuo-ku Sapporo-shi Hokkaido 064 (JP)**

(43) Veröffentlichungstag der Anmeldung: **22.01.86**
**Patentblatt 86/4**

(72) Erfinder: **TAKEUCHI, Kunio Room 201,
Asahigaoka-House, 1-1, Nishi 23-chome, Minami 12 jho,
Chuo-ku, Sapporo-shi Hokkaido 064 (JP)**

(84) Benannte Vertragsstaaten: **AT BE CH DE FR GB LI LU
NL SE**

(74) Vertreter: **Olbricht, Karl Heinrich, Dipl.-Phys., Am
Weinberg 15, D-3556 Niederweimar (DE)**

(54) **SPEZIALLINSE FÜR BRILLE.**

(57) A special lens comprises a spectacle lens and a pol-
arizing film which is bonded onto the lens aligned at an
angle corresponding to the measured astigmatic angle, that
is, the distortion, of the eyeball concerned.

- 1 -

---

Brillengläser und Verfahren zu ihrer Herstellung

---

## Beschreibung

Die vorliegende Erfindung betrifft Brillengläser gemäß dem
Oberbegriff von Anspruch 1 sowie ein Verfahren zu ihrer Herstellung gemäß dem Oberbegriff von Anspruch 6.

Brillen mit erfindungsgemäßen Gläsern sind insbesondere dazu
gedacht, Benutzer von Bildschirm-Geräten, Computern usw. vor
schädlichen Einwirkungen zu schützen. Wer vor derartigen
Apparaturen längere Zeit sitzt, ist einer beachtlichen körperlichen und geistigen Beanspruchung ausgesetzt, die zu Kopf-
schmerzen, Schwindelgefühl und Erbrechen führen kann. Die auf-
tretende große Augen-Belastung kann Amblyopie bewirken.

In der 4. Ausgabe (7) der Asahi-Abendzeitung vom 23.12.1983 wurde
unter der Überschrift "Sogenannte OA-Berufskrankheit breitet sich
zunehmend aus - ruft bei allgemeiner Büroarbeit deutliche Veränderungen durch Augen-Belastung und körperliche Anstrengung
hervor" eingehend über den damaligen Stand der OA-Krankheit
berichtet. Man beließ es jedoch darin bei der Angabe, daß selbst
kurzes Rasten bereits einen wesentlichen Effekt der Erholung von
eingetretener Müdigkeit bringt. Die Veröffentlichung gab keinerlei
Hinweis auf Heilmethoden oder auf die Verwendung von Hilfsmitteln.

Bei der Benutzung von Computern u.dgl. sind bekanntlich Tastenfelder zu bedienen, während Zeichen (Buchstaben, Zahlen),
Zeichnungen usw. auf einem Bildschirm beobachtet werden müssen.
Die von elektronischen Signalen erzeugten Lichtwellen und
Strahlungen gelangen in das ungeschützte Auge der betreffenden
Person und vereinigen sich auf dem gelben Fleck am Augapfel-
Hintergrund. Die Rezeptoren und Sehnerven werden daher beim
Ablesen und Aufnehmen (Verstehen) der Darbietungen aufs äußerste
angestrengt.

Zusätzlich ist die Helligkeit von Bildschirm-Darbietungen keineswegs gleichmäßig. Vielmehr unterliegt die elektronische Steuerung
ständigen Veränderungen zwischen starker und schwacher Intensität,
so daß die optische Strahlung entsprechend schwankt. Diese fortgesetzten Streuungen machen die Bildschirm-Darbietungen instabil,
so daß dort neu erzeugte Infrarot- und Ultraviolettstrahlen ins
Auge des Betrachters fallen und wiederum zu Sehschwäche bzw.
Ermüdung beitragen.

Es ist daher ein wichtiges Ziel der Erfindung, durch verbesserte
Brillengläser weitestgehend das Auftreten von Augen-Belastungen,
vermindertem Sehvermögen und allgemeinem Streß infolge von
Tätigkeit an Bildschirm-Geräten zu verhindern bzw. abzumildern.
Insbesondere ist die Erfindung auf eine spezielle Gestaltung von
Brillengläsern für die Dauerbeobachtung von Bildschirm-Darbietungen
gerichtet. Ferner soll ein Verfahren zum Herstellen solcher neuartiger Brillengläser geschaffen werden.

Der Grundgedanke des Aufbaues der erfindungsgemäßen Brillengläser
ist im kennzeichnenden Teil von Anspruch 1 angegeben. Ausgestaltungen sind Gegenstand der Unteransprüche 2 bis 5. Das
Verfahrens-Prinzip ist in Anspruch 6 gekennzeichnet; eine Weiterbildung davon ist in Unteranspruch 7 präzisiert.

Das Konzept der Erfindung beruht auf der Erkenntnis, daß harte
Kontaktlinsen tragendes Bedienungspersonal von Sichtgeräten eine
geringere Augen-Belastung zu beklagen hat als allgemeines sonstiges Personal, das keine harten Kontaktlinsen benutzt. Bei der Suche nach den Ursachen hierfür wurde von der Tatsache ausgegangen, daß jeder Mensch an den unbewaffneten Augen unterschiedliche Sehstärke besitzt. Am Augapfel tritt eine Sehabweichung in Form von Astigmatismus auf, wobei das linke Auge gewöhnlich einen anderen Winkelfehler hat als das rechte Auge. Bei starken Abbildungsfehlern ist es üblich geworden, Astigmatismus-Korrekturlinsen zu verwenden. Die Erfindung sieht nun Brillengläser vor, die auf herkömmlichen Augengläsern (Linsen) Polarisations- Schichten oder -Folien aufweisen, welche entsprechend den gemessenen Winkelfehlern dimensioniert und angeordnet sind. Dazu werden die Astigmatismuswinkel des bloßen linken und rechten Auges des bzw. der Betreffenden gemessen, worauf das Ausmaß der Verzerrung berechnet wird, das an den beiden Brillengläsern auftreten würde und stattdessen durch Aufbringen der Polarisations- Beschichtung ausgeglichen wird.

In der Weiterbildung nach Anspruch 2 ist eine gegebenenfalls mehrlagige Polarisations-Schicht zwischen zwei Linsen eines Brillenglases angeordnet oder nach Anspruch 3 einseitig, insbesondere rückseitig, an einer Linse eines Brillenglases angebracht. Zusätzlich kann gemäß Anspruch 4 eine Schutzschicht vorgesehen sein, die Ultraviolett- und Infrarot-Strahlung und/oder andere schädliche Strahlungen absorbiert bzw. ausblendet.

Eine Ausgestaltung der Erfindung besteht laut Anspruch 5 darin, daß die Polarisationsschicht etwa zwei Drittel der Fläche eines Brillenglases bedeckt, namentlich seinen oberen Teil.

Ferner sieht die Erfindung nach Anspruch 6 vor, daß für die Korrektur bei Augen-Winkelfehlern im Bereich von $0^o$ bis $90^o$ jeweils $90^o$ addiert und bei Winkelfehlern im Bereich von $90^o$ bis $180^o$ jeweils $90^o$ abgezogen werden, um den mittels der Polarisations-Schichten oder -Folien auf den Brillengläsern auszugleichenden Winkel festzulegen.

Mit dem erfindungsgemäßen Verfahren laut Anspruch 7 werden herkömmliche Polarisations-Folien der gewählten Bemessung durch

- 4 -

Thermokompression bei 60 °C mit den Brillengläsern fest verbunden, und zwar entweder zwischen formschlüssigen Linsen
eines Brillenglases oder rückseitig an dem bzw. jedem Brillenglas.

Weitere Merkmale, Einzelheiten und Vorteile der Erfindung ergeben
sich aus der folgenden Beschreibung von Ausführungsbeispielen
anhand der Zeichnung. Darin zeigen:

Fig. 1    eine Schrägansicht einer Brille mit erfindungsgemäßen
          Gläsern,

Fig. 2    eine Vorderansicht eines Brillenglases nach einer Ausführungsform der Erfindung,

Fig. 3    eine Vorderansicht einer anderen Ausführungsform eines
          Brillenglases,

Fig. 4    eine schematisierte Seitenansicht einer Doppellinse mit
          dazwischen befindlicher Folie vor dem Zusammenfügen nach
          einer Ausführungsform des erfindungsgemäßen Verfahrens
          und

Fig. 5    eine schematisierte Seitenansicht einer Einfachlinse und
          einer Folie zur rückseitigen Anbringung gemäß einer
          Verfahrensvariante.

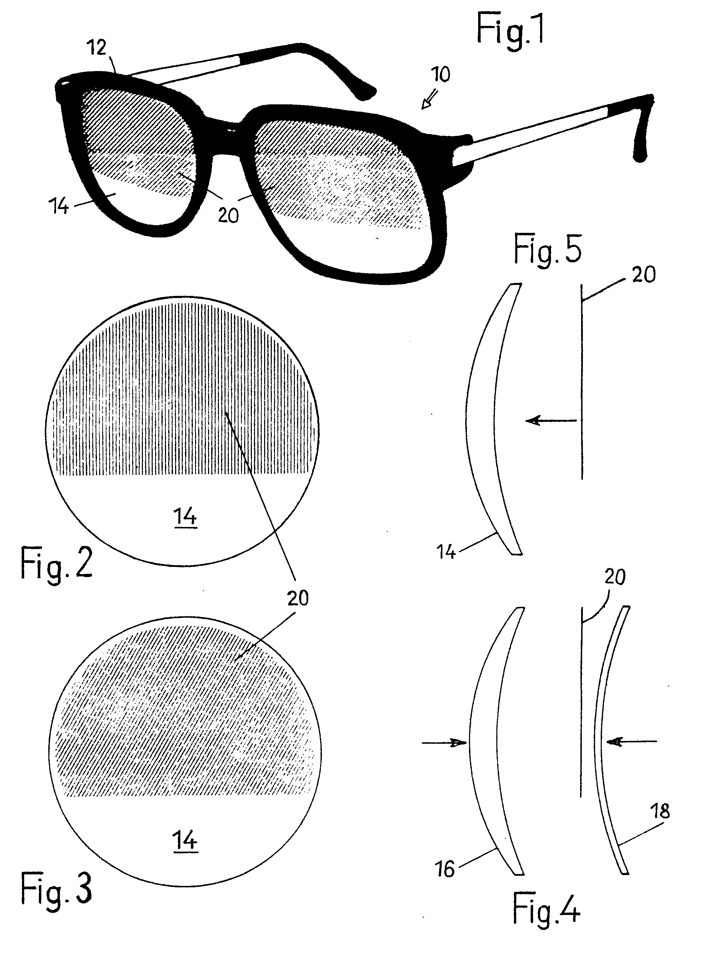

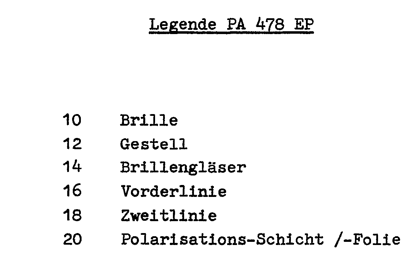

Die in Fig. 1 gezeigte Brille 10 hat ein Gestell 12 und zwei
Brillengläser 14, deren obere Partien mit einer Polarisations-
Folie oder Beschichtung 20 versehen sind.

Die Brillengläser 14 können beliebige, dem jeweiligen Gestell 12
angepaßte Formen haben. In den Beispielen der Fig. 2 bis 5 ist
der Einfachheit halber eine kreisförmige Gestalt veranschaulicht.
Man erkennt, daß die Polarisations-Beschichtung 20 etwa die
oberen zwei Drittel der Fläche jedes Brillenglases 14 einnimmt.

In Fig. 2 ist die Beschichtung 20 so gewählt, daß der Korrektur-
winkel $\beta$ um 90° größer ist als der im Bereich zwischen 0° und
90° gemessene Winkelfehler $\alpha$. Beträgt dieser zum Beispiel
$\alpha$ = 30°, so ist der Korrekturwinkel $\beta$ = 120°.

Bei der Ausführungsform nach Fig. 3 für Winkelfehler $\alpha$, die im
Bereich von 90° bis 180° liegen, wählt man die Beschichtung 20 so, daß der Korrekturwinkel $\beta$ um 90° vermindert wird. Beispielsweise würde für einen Winkelfehler von $\alpha$ = 100° der Korrekturwinkel $\beta$ = 10° betragen.

Die persönliche Linsenstärke kann altersabhängig verändert werden, um die mit der Erfindung mögliche Korrektur noch zu verbessern und die Augen-Belastung weiter herabzusetzen. Geeignet sind etwa folgende Ansätze:

| Altersgruppe | Linsenstärke |
|---|---|
| 15 bis 25 Jahre | + 0,50 |
| 25 bis 35 Jahre | + 0,75 |
| 35 bis 45 Jahre | + 1,00 |
| 45 bis 55 Jahre | + 1,25 |

Anzumerken ist, daß die Polarisations-Beschichtung 20 nicht nur auf optometrisch bzw. ophthalmologisch bemessene Brillengläser 14, sondern auch auf einfache Augengläser ohne Linsenwirkung aufgebracht werden kann. Nach Fig. 4 kann man dazu so vorgehen, daß die Polarisations-Folie 20 zwischen einer Vorderlinse 16 und einer formschlüssig an sie anschließenden Zweitlinse 18 angeordnet wird, worauf die beiden Einzellinsen 16, 18 in den eingezeichneten Pfeilrichtungen zusammengesetzt werden, um ein Brillenglas 14 zu bilden. In der Variante gemäß Fig. 5 wird ein einlinsiges Brillenglas 14 rückseitig mit einer Polarisationsfolie 20 versehen. Die Verbindung erfolgt bevorzugt durch Thermokompression, beispielsweise bei 60 °C.

Messungen haben erbracht, daß normalsichtige Benutzer von Bildschirmgeräten ohne Sichtschutz höchstens etwa 60 min lang kontinuierlich am Bildschirm arbeiten können, bis Ermüdung und Beeinträchtigung der gewöhnlichen Sehkraft eintritt. Dieselben Benutzer können jedoch unter Verwendung erfindungsgemäßer Brillengläser ohne weiteres bis zu 160 min und darüber die gleiche Arbeit konzentriert ausführen. Der Grund dafür wird darin gesehen, daß durch die Hilfsmittel der Erfindung eine Korrektur

- 6 -

der Abbildungsfehler im Auge bewirkt und außerdem der Durchlaßbereich der Lichtwellen an den Brillengläsern vergleichmäßigt
wird. Es wird angenommen, daß das am gelben Fleck des bzw.
jedes Auges erzeugte Bild die Sehnerven entsprechend weniger
beansprucht und die Augapfel-Verformung sich nicht vom Normalzustand unterscheidet.

Die Verwendung von Bildschirm-Geräten hat in den letzten Jahren
stürmisch zugenommen. Allein in Japan sind bis 1983 über 1 Million
Geräte abgesetzt worden. Die Entwicklung der Bürotechnik führt
zu intensivem Einsatz nicht nur in Handel, Gewerbe und Industrie,
sondern auch bei den Freien Berufen und im privaten Bereich. Eine
Lösung für die im eingangs erwähnten Zeitungsbericht genannten
Probleme der Augen-Belastung war jedoch im Prioritätszeitpunkt
nicht erkennbar oder gar erreicht. Erwähnenswert ist die Untersuchung von Hiromoto Shindo (Labor Science Institute), wonach
184 junge weibliche Bürokräfte über ihr Befinden befragt wurden.
Bei allgemeiner Büroarbeit klagten 55,1 % über Müdigkeit oder
Zerschlagenheit, wogegen solche Beschwerden von 61,5 % der Bildschirm-Angestellten vorgebracht wurden. Angespanntheit und
Frustration wurden von 29,5 % bei allgemeiner Büroarbeit, von
54,8 % bei Bildschirm-Arbeit angegeben. Lustlosigkeit und Abgeschlagenheit wurden allgemein von 30,5 % und an Bildschirm-Geräten
von 39,5 % genannt. Ansonsten gibt es europäische und amerikanische
Berichte, wonach bei einigen Bildschirm-Arbeitskräften Hautausschläge auftraten (Großbritannien, Norwegen) oder Fehlgeburten
vorkamen (Kanada).

Um so überraschender ist es, daß die vorliegende Erfindung den
ersten konkreten und wichtigen Beitrag zur tatsächlichen Lösung
des Problems liefert.

Sämtliche aus den Ansprüchen, der Beschreibung und der Zeichnung
hervorgehenden Merkmale und Vorteile der Erfindung, einschließlich konstruktiver Einzelheiten und räumlicher Anordnungen,
können sowohl für sich als auch in den verschiedensten Kombi-
nationen erfindungswesentlich sein.

0168498

---

Brillengläser und Verfahren zu ihrer Herstellung

---

P a t e n t a n s p r ü c h e

1. Brillengläser, bestehend aus jeweils wenigstens einem Glas-
oder Linsenkörper (14), dadurch   g e k e n n z e i c h n e t,
daß sie mit einer Polarisations-Schicht oder -Folie (20)
solcher Dimensionierung und Anordnung versehen sind, daß
astigmatische Augen-Winkelfehler ($\alpha$) durch einen Korrektur-
winkel ($\beta$) ausgeglichen werden.

2. Brillenglas nach Anspruch 1, dadurch   g e k e n n z e i c h-
n e t, daß eine gegebenenfalls mehrlagige Polarisations-
Schicht oder -Folie (20) zwischen einer Vorderlinie (16)
und einer formschlüssig daran anschließenden Zweitlinse
(18) angeordnet ist.

3. Brillenglas nach Anspruch 1, dadurch   g e k e n n z e i c h-
n e t, daß eine gegebenenfalls mehrlagige Polarisations-
Schicht oder -Folie (20) einseitig, insbesondere rückseitig,
an einem Glas- oder Linsenkörper (14) angebracht ist.

4. Brillengläser  nach einem der Ansprüche 1 bis 3, dadurch
g e k e n n z e i c h n e t, daß zusätzlich eine Schutz-
schicht vorhanden ist, die Ultraviolett- und/oder Infrarot-
Strahlung absorbiert bzw. ausblendet.

5. Brillenglas nach wenigstens einem der Ansprüche 1 bis 4,
dadurch  g e k e n n z e i c h n e t, daß die Polarisations-
Schicht oder -Folie (20) etwa zwei Drittel der Fläche eines
Glas- oder Linsenkörpers (14) bedeckt, namentlich seinen
oberen Teil.

6. Verfahren zum Herstellen von Brillengläsern nach wenigstens
einem der Ansprüche 1 bis 5, dadurch  g e k e n n z e i c h-
n e t, daß zur Bemessung der Polarisations-Beschichtung ein
Korrekturwinkel ($\beta$) festgelegt wird, indem bei Augen-Winkel-
fehlern ($\alpha$) im Bereich von $0^o$ bis $90^o$ jeweils $90^o$ addiert
und bei Winkelfehlern ($\alpha$) im Bereich von $90^o$ bis $180^o$ jeweils
$90^o$ abgezogen werden.

7. Verfahren nach Anspruch 6, dadurch  g e k e n n z e i c h-
n e t, daß die Polarisations-Beschichtung durch Thermokompression mit dem bzw. jedem Glas- oder Linsenkörper
verbunden wird, vorzugsweise bei etwa 60 $^o$C.

Fig.1

Fig.5

Fig.2

Fig.3

Fig.4

## Legende PA 478 EP

10      Brille
12      Gestell
14      Brillengläser
16      Vorderlinie
18      Zweitlinie
20      Polarisations-Schicht /-Folie

$\alpha$      Augen-Winkelfehler
$\beta$      Korrekturwinkel

# INTERNATIONAL SEARCH REPORT

International Application No. PCT/JP84/00067

## I. CLASSIFICATION OF SUBJECT MATTER (if several classification symbols apply, indicate all) 3

According to International Patent Classification (IPC) or to both National Classification and IPC

Int. Cl$^3$ G02C7/12

## II. FIELDS SEARCHED

### Minimum Documentation Searched 4

| Classification System | Classification Symbols |
|---|---|
| IPC | G02C7/12, G02C7/02, G02C7/10 |

| | Documentation Searched other than Minimum Documentation to the Extent that such Documents are Included in the Fields Searched 5 | |
|---|---|---|
| | Jitsuyo Shinan Koho | 1926 – March, 1984 |
| | Kokai Jitsuyo Shinan Koho | 1971 – March, 1984 |

## III. DOCUMENTS CONSIDERED TO BE RELEVANT 14

| Category* | Citation of Document, 16 with indication, where appropriate, of the relevant passages 17 | Relevant to Claim No. 18 |
|---|---|---|
| A | JP, Y1, 30-17975 (Hashimoto Yohei) 13 December 1955 (13. 12. 55) | 1 – 3 |
| A | JP, B2, 49-37545 (Yoshimura Masayoshi) 9 October 1974 (09. 10. 74) | 1 – 3 |
| A | JP, B2, 51-5304 (Polaroid Corp.) 19 February 1976 (19. 02. 76) | 1 – 3 |
| A | JP, B2, 53-29711 (Polaroid Corp.) 22 August 1978 (22. 08. 78) | 1 – 3 |
| A | US, A, 2323518 (C.W. COCHRAN) 6 July 1943 (06. 07. 43) | 1 – 3 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| June 1, 1984 (01. 06. 84) | June 11, 1984 (11. 06. 84) |

| International Searching Authority 1 | Signature of Authorized Officer 20 |
|---|---|
| Japanese Patent Office | |

Form PCT/ISA/210 (second sheet) (October 1981)